# NOUVEAU FASCICULE DE BREVET EUROPEEN

(11) **EP 0 711 438 B2**
(45) Date de publication et mention de la décision concernant l'opposition: **25.02.2009**
(45) Mention de la délivrance du brevet: 28.07.2004
(21) Numéro de dépôt: 95921867.8
(22) Date de dépôt: 31.05.1995
(51) Int. Cl.: G06K 7/06

(54) **CONNECTEUR ELECTRIQUE POUR LE RACCORDEMENT D'UNE CARTE A MEMOIRE ELECTRONIQUE COMPORTANT UN COMMUTATEUR INTEGRE DE DETECTION DE LA PRESENCE D'UNE CARTE**
ELEKTRISCHER VERBINDER ZUM VERBINDEN EINER ELEKTRONISCHEN SPEICHERKARTE, MIT EINEM INTEGRIERTEN SCHALTER, DER DIE ANWESENHEIT EINER KARTE ERKENNT
ELECTRIC CONNECTOR FOR CONNECTING AN ELECTRONIC SMART CARD INCLUDING A BUILT-IN SWITCH FOR DETECTING THE PRESENCE OF A CARD

(30) Priorité: 01.06.1994 FR 9406683
(43) Date de publication de la demande: 15.05.1996
(73) Titulaire: C&K Components SAS, 39100 Dole (FR)
(72) Inventeur: BRICAUD, Hervé, F-39100 Dole (FR); VALCHER, Fabrice, F-39100 Dole (FR)
(74) Mandataire: Kohn, Philippe
(86) Numéro de dépôt international: PCT/FR1995/000708
(87) Numéro de publication internationale: WO 1995/033243

(56) Documents cités:
- EP-A- 0 274 288
- EP-A- 0 316 699
- EP-A- 0 474 519
- EP-A- 0 474 519
- EP-A- 0 657 456
- EP-A- 0 660 253
- WO-A2-91/04547
- DE-C- 4 218 970
- FR-A- 2 658 364
- US-A- 4 900 273

## Description

La présente invention concerne un connecteur électrique pour le raccordement d'une carte à mémoire électronique, également appelée carte à circuit(s) intégré(s) comportant sur une de ses faces principales une pluralité de plages de contact électrique alignés parallèlement à la direction d'introduction de la carte dans un dispositif de lecture-écriture.

Le raccordement électrique d'une carte à mémoire électronique, également appelée carte à microcircuit, nécessite de pouvoir déterminer de manière précise, et conformément à une procédure normalisée, la présence de la carte dans un dispositif de lecture-écriture et de disposer de moyens de butée qui déterminent la fin de la course d'introduction de la carte dans le dispositif de lecture-écriture.

Le document EP-A-0.474.519 décrit et représente un connecteur électrique comportant un boîtier qui délimite au moins partiellement une fente d'introduction de la carte, un commutateur de fin de course d'introduction de la carte et des moyens de commande du commutateur avec lesquels coopère le bord transversal antérieur de la carte, les moyens de commande comportant un levier dont un point d'appui coopère avec un organe de déclenchement du commutateur et dont le point d'application de la force motrice par la carte coopère avec le bord antérieur de la carte.

La structure de ce type de connecteur fait appel à un composant principal de grandes dimensions qui nécessite de surmouler la partie constitutive principale de ce corps sur les éléments de contact électrique prévus pour le raccordement avec les plages de la carte et de positionner, de manière plus ou moins précise, le commutateur dans le corps de ce même élément.

Cette conception, outre sa complexité et son encombrement, oblige à réaliser un connecteur complet particulier pour chaque type d'application et empêche ainsi de disposer d'une gamme modulaire de connecteurs pouvant être réalisés à partir de composants de base standardisés.

Il a déjà été proposé dans la demande de brevet français FR-A-2 714 539 une structure d'un connecteur électrique de dimensions particulièrement réduites qui peut être intégré selon les différentes techniques connues pour l'assemblage des composants électroniques, dans un dispositif de lecture-écriture, en étant fixé sur une plaque à circuit imprimé de ce dispositif de lecture.

Cette conception ne permet toutefois pas d'assurer de manière fiable le positionnement relatif précis du connecteur électrique compact et d'un commutateur de détection de la présence et de la bonne position de la carte dans le dispositif de lecture-écriture (NORME ISO 7810), ce commutateur étant positionné et fixé sur la carte à circuit imprimé indépendamment du connecteur électrique.

L'objet de la revendication 1 diffère de EP-A-675456, un document de l'art antérieur selon l'article 54 (3) CBE, par les caractéristiques du dernière paragraphe de la revendication.

La présente invention a pour but de proposer une nouvelle conception d'un connecteur électrique compact pour le raccordement d'une carte à mémoire électronique qui remédie aux inconvénients qui viennent d'être mentionnés.

Dans ce but, l'invention propose un connecteur électrique pour le raccordement d'une carte à mémoire électronique tel que défini à la revendication 1.

D'autre mode de réalisation de l'invention sont définis aux revendications auxiliaires.

D'autres caractéristiques et avantages de l'invention apparaîtront à la lecture de la description détaillée qui va suivre pour la compréhension de laquelle on de reportera aux dessins annexés dans lesquels :
- la figure 1 est une vue de dessus d'un exemple de réalisation d'un connecteur électrique conforme aux enseignements de l'invention ;
- la figure 2 est une vue en section partielle selon la ligne 2-2 de la figure 1 ;
- la figure 3 est une vue latérale de droite du connecteur illustré sur la figure 1 ;
- la figure 4 est une vue selon la flèche F4 de la figure 1 ;
- la figure 5 est une vue de dessous et à plus grande échelle de la partie du connecteur qui intègre le commutateur de fin de course ;
- la figure 6 est une vue partielle en section selon la ligne 6-6 de la figure 5 ;
- la figure 7 est une vue de dessous du couvercle du corps du connecteur illustré sur la figure 1 ;
- la figure 8 est une vue en section partielle selon la ligne 8-8 de la figure 7 ;
- la figure 9 est un schéma illustrant les dimensions relatives du connecteur par rapport à une carte à microcircuit ;
- la figure 10 est une vue de dessus d'une variante de réalisation d'un connecteur en une seule pièce comportant un commutateur intégré ;
- la figure 11 est une vue en section partielle selon la ligne 11-11 de la figure 10 ; et
- la figure 12 est une vue similaire à celle de la figure 11 avec un commutateur du type normalement ouvert.

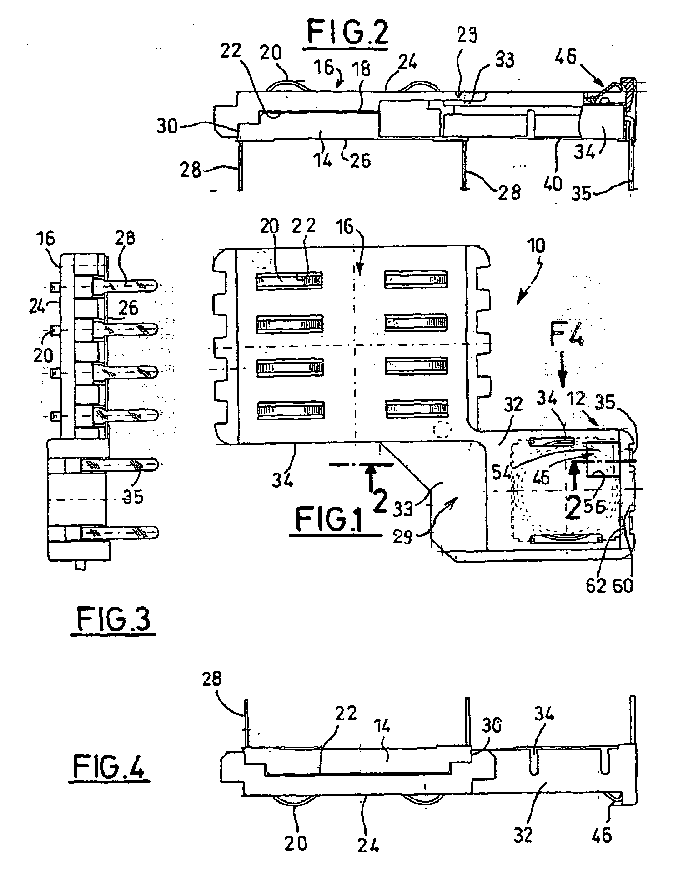

On a représenté sur les figures 1 à 4 un ensemble de connecteur 10 comportant un commutateur intégré 12 de détection de présence d'une carte à microcircuit et incorporant des moyens de butée de fin de course pour cette carte.

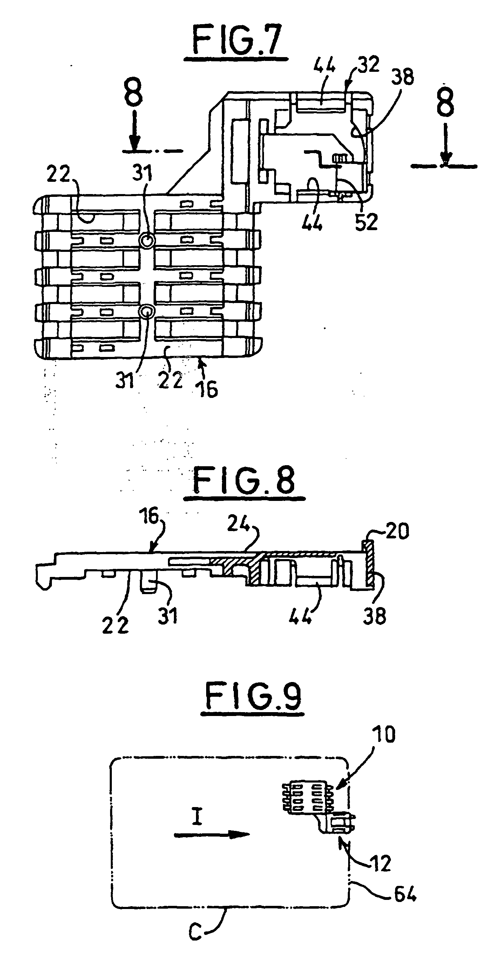

Sur le schéma illustré sur la figure 9, on a également représenté en silhouette une carte C sur laquelle on a indiqué sa direction d'introduction I et sa disposition par rapport à l'ensemble de connecteur 10.

Le connecteur 10 est prévu pour être monté sur une plaque à circuit imprimé d'un dispositif de lecture-écriture (non représentée), le dispositif de lecture-écriture comportant ses moyens propres de guidage de la carte C lors de son introduction et éventuellement des moyens de positionnement relatif de la carte C par rapport à l'ensemble de connecteur 10 qui pressent la carte verticalement.

La partie principale du connecteur 10 illustré sur les figures 1 à 4 est pour l'essentiel constituée par un socle 14 formant module de support en matériau isolant et par un couvercle 16 en matière plastique moulée.

Selon la conception connue, qui est par exemple illustrée dans la demande de brevet français FR-A-2 714 539, le socle 14 est pour l'essentiel constitué d'une plaque horizontale qui délimité une face supérieure plane 18 qui sert de support à une pluralité de lames déformables élastiquement de contact électrique 20 qui font saillie dans des fentes 22 formées dans le couvercle 16 dont la face inférieure 22 prend appui verticalement, en considérant la figure 2, sur la face supérieure 18 du socle 14.

Les lames de contact 20 font saillie au-delà de la face supérieure 24 du couvercle 16 pour venir en contact avec les plages conductrices correspondantes de la carte C et elles se prolongent, dans ce mode de réalisation, au-delà de la face inférieure 26 de la plaque support 14 sous la forme de bornes de raccordement 28 destinées à être piquées dans une plaque à circuit imprimé.

Les sorties 28, peuvent également être brasées à plat ou simplement maintenues élastiquement en appui contre des zones conductrices du circuit imprimé.

Le support 14 présente un contour rectangulaire 30 qui est emboîté dans un contour complémentaire formé dans le couvercle 16.

Conformément à l'invention, le commutateur 12 est intégré à l'ensemble de connecteur 10.

A cet effet, le couvercle 16 présente un prolongement adjacent 32 qui est réalisé venu de matière par moulage avec le couvercle 16.

Le prolongement 32 servant de support et de boîtier aux principaux composants d'un commutateur de détection de présence de la carte C, est adjacent à l'un des bords longitudinaux 34 de la partie principale du couvercle 16, parallèle à la direction d'introduction I.

Le prolongement 32 est relié au bord longitudinal 34 par une portion 33 triangulaire réalisée venue de matière par moulage et dont l'épaisseur est réduite pour ménager un dégagement 29 permettant le passage de parties en relief, par exemple de gravures, formées sur la partie correspondante de la carte.

Comme on peut le voir sur la figure 7, la face inférieure 22 du couvercle 16 comporte des plots 31 pour le positionnement relatif du couvercle 16 sur le socle 14 et l'assemblage de ces deux composants.

La face supérieure 24 du couvercle 16 est une face plane continue qui constitue également la face supérieure plane du prolongement 32.

Cette face supérieure plane est susceptible de constituer une face d'appui pour le coulissement de la face correspondante de la carte C.

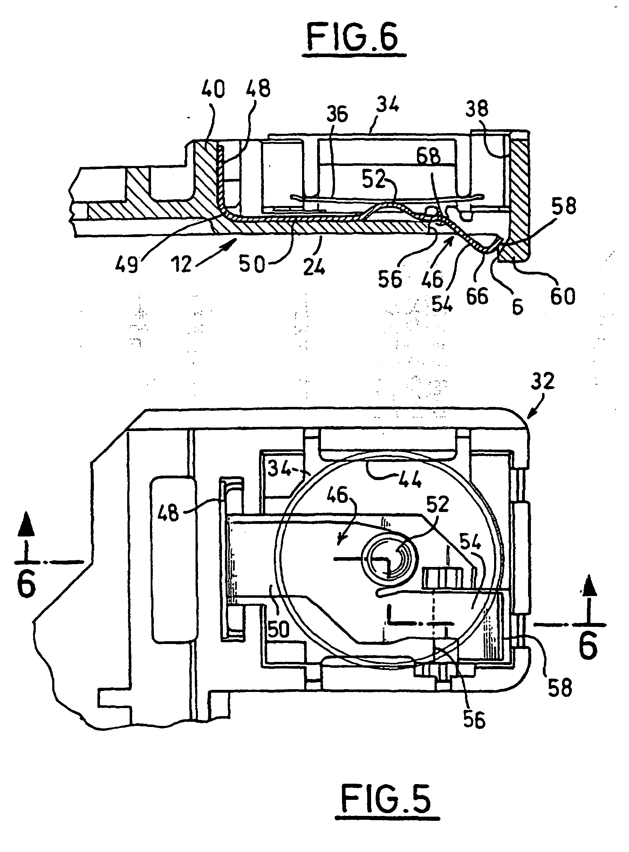

On a représenté en silhouette sur la figure 1 et en vue extérieure sur la figure 2 le corps cylindrique 34 d'un commutateur électrique, également appelé "mi-croswitch" du type, comme cela est illustré sur la figure 6, comportant un élément de déclenchement bombé monostable 36.

Le commutateur 34 est agencé dans un logement 38 accessible depuis la face inférieure 40 du prolongement 32 dans lequel il est maintenu par des pattes déformables élastiquement 44. Le commutateur n'est représenté qu'en silhouette sur la figure 5.

A titre de variante, le boîtier 34 peut également être fixé par rivetage à chaud.

L'élément de commande du déclenchement du commutateur 34 est un levier 46 qui est réalisé sous la forme d'une lame métallique déformable élastiquement.

Une première extrémité 48 du levier 46 est emboîtée dans le matériau isolant constitutif du prolongement 32 de manière à constituer l'extrémité encastrée d'une poutre déformable élastiquement.

L'extrémité d'encastrement 48 se prolonge par une partie principale allongée 50 comportant une zone incurvée 52 qui s'étend en regard de l'élément bombé déformable 36 du commutateur 34. L'extrémité verticale 48 est raccordée à la partie horizontale 50 par une zone de raccordement incurvée 49.

Au-delà de la zone bombée 52, et avec un décalage latérale par rapport à la partie allongée 50; comme on peut le voir sur la figure 5, le levier de commande 46 se prolonge par une portion d'extrémité libre formant rampe 54, qui fait saillie au-delà de la face supérieure plane 24 du prolongement 32 à travers une fente 56 formée dans la paroi supérieure du prolongement 32.

L'axe d'articulation du levier 46 est situé sensiblement au point de raccordement 49 entre l'extrémité 48 et la partie allongée 50, le point d'appui 52 qui coopère avec le commutateur 34 étant situé entre l'axe d'articulation et le point d'application de la force de commande par la carte constitué par la rampe 54.

La partie d'extrémité formant rampe 54 se termine par une partie rabattue 58 qui s'étend en regard d'une portion 60 du prolongement 32 qui fait saillie au-delà de la face supérieure 24 pour délimiter une surface transversale de butée 62 qui est susceptible de coopérer avec le bord transversal avant 64 (voir figure 9) de la carte C.

La conformation de la partie formant rampe 54 est telle que, lorsque la carte C est en position de lecture, le sommet ou dôme d'extrémité 66 coopère avec une portion de face plane en vis-à-vis de la carte C et le levier n'exerce ainsi plus aucun effort sur la carte selon une direction parallèle à sa direction d'introduction I, tendant à la faire reculer, c'est-à-dire à l'éloigner de la surface de butée 62.

Lors de l'introduction de la carte C, le bord transversal avant 64 de cette dernière coopère avec la rampe 54 qui provoque un pivotement global du levier 46 autour de sa zone d'articulation pour provoquer un actionnement du commutateur 34, qui est un commutateur du type normalement ouvert, puis provoque une flexion de la portion d'extrémité formant rampe 54 autour d'un point ou zone de flexion 68 représentée sur la figure 6 afin de permettre l'effacement complet de la rampe 54 sous la carte sans accroître de manière trop importante l'effort de déclenchement appliqué au dôme 36 du commutateur 34. Cet agencement permet également une surcourse de déplacement de la carte après le déclenchement du commutateur pour absorber les tolérances des différents composants du système de lecture-écriture et de la carte.

Du fait de l'intégration du commutateur au connecteur 10, et notamment de son intégration au couvercle 16, le positionnement normalisé de la carte en position de lecture est détecté de manière précise par le commutateur 12 de détection de la présence de la carte C sans risque d'erreur possible.

Lors du montage de l'ensemble de connecteur 10 sur une carte à circuit imprimé, le raccordement du commutateur 34 peut être assuré simultanément par piquage de ses bornes 35 dans la carte à circuit imprimé.

Grâce à la présence du point de flexion 68, l'effort d'introduction à appliquer à la carte I pour le déclenchement du commutateur 12 est très réduit et est limité à l'effort suffisant pour provoquer la déformation du dôme 36.

Dans le mode de réalisation dans lequel le commutateur est intégré au couvercle, cette conception permet de réaliser toute une gamme de connecteurs comportant chacun un commutateur 12, le type des moyens de raccordement et de fixation de l'ensemble de connecteur 10 dans le dispositif de lecture-écriture étant lié à la borne des pattes ou bornes de raccordement 28 réalisées venues de matière avec les lames de contact électrique 20.

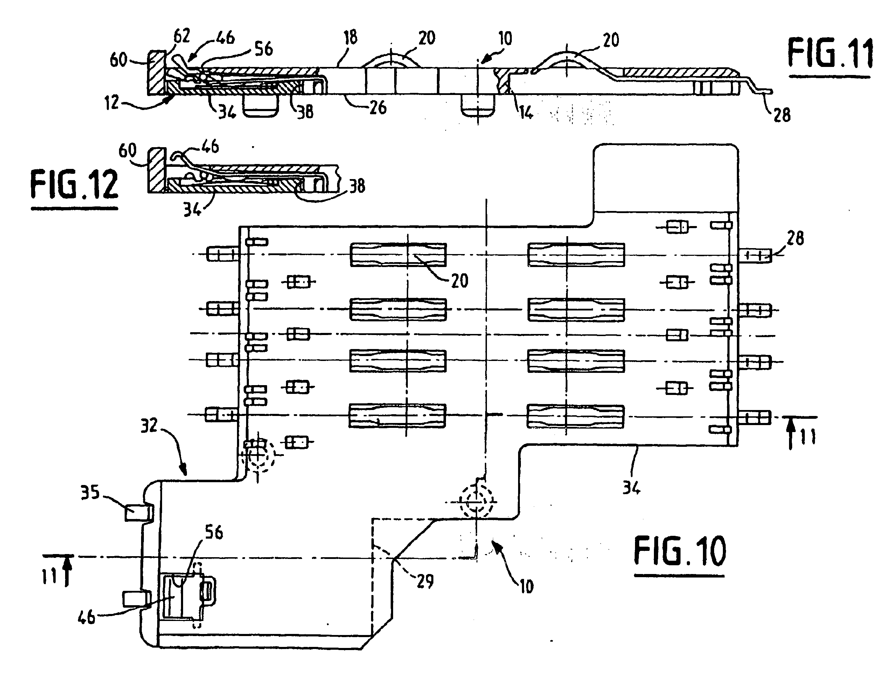

On décrira maintenant la variante de réalisation illustrée aux figures 10 à 12.

Sur les figures 10 à 12, des composants identiques ou similaires à ceux décrits et représentés en référence aux figures 1 à 9 qui sont désignés par les mêmes chiffres de référence.

Selon ce mode de réalisation, le connecteur ne comporte plus de couvercle et le commutateur est directement intégré au socle 14 formant porte-contacts, notamment de manière à réduire l'épaisseur globale du connecteur avec son commutateur.

Ainsi, comme on peut le voir notamment aux figures 11 et 12, le corps 34 du commutateur est agencé dans un logement 38 qui est formé dans la face inférieure 26 du support 14 et ses moyens de commande 46 font saillie au-delà de la face supérieure 18 du porte-contacts 14, à travers une fente 56 formée dans la face supérieure 18.

Aux figures 10 et 11, le commutateur est du type normalement fermé tandis que, à la figure 12, le commutateur est du type normalement ouvert.

La portion 60 qui délimite la surface transversale de butée 62 est également réalisée venue de matière avec le porte-contacts 14.

Le commutateur peut être du type normalement ouvert ou fermé. De même le dôme monostable peut être inversé pour disposer d'un commutateur normalement ouvert ou fermé.

La conception selon l'invention permet également d'utiliser le connecteur dans un dispositif de lecture-écriture dans lequel la carte se déplace verticalement selon une direction perpendiculaire à la face supérieure.

La conception selon l'invention peut être utilisée avec tous les formats de cartes ainsi qu'avec des supports équivalents d'un microcircuit.

A titre de variante (non représentée), un même connecteur peut comporter deux commutateurs intégrés, par exemple un commutateur du type normalement ouvert et commutateur du type normalement fermé, qui sont actionnés simultanément par la carte.

## Revendications

1. Connecteur électrique (10) pour le raccordement d'une carte à mémoire électronique (C) comportant une pluralité de plages de contact électrique sur sa face principale inférieure, le connecteur électrique comportant :
- une partie de corps de contact qui délimite une face supérieure (24) ;
- une pluralité de conducteurs électriques, portés par la partie de corps de contact, en forme de lames déformables élastiquement (20), chaque lame de contact (20) comportant une extrémité de contact qui fait saillie au-dessus de ladite face supérieure (24) de la partie de corps de contact, et comportant une borne (28) de raccordement avec une plaque à circuit imprimé ;
- une partie (32) de prolongement qui délimite une face supérieure ;
- un commutateur électrique agencé dans un corps (34), le corps (34) étant agencé dans un logement formé dans une face de ladite partie de prolongement (32), et comportant des bornes (35) de raccordement avec la plaque à circuit imprimé ;
- un organe (46) de commande du déclenchement du commutateur qui fait saillie au-dessus de ladite face supérieure de la partie de prolongement (32),
- lesdites parties de corps de contact et de prolongement (32) étant réalisées moulées en une seule pièce avec leurs dites faces supérieures coplanaires ;
- ladite partie de corps de contact ayant, en vue de dessus, un contour général sensiblement rectangulaire avec des extrémités avant et arrière et des premier et second côtés opposés, ladite partie de corps de contact comportant une zone d'intersection à l'intersection de ladite extrémité avant et dudit second côté ;
- ladite partie de prolongement (32) s'étendant au-delà de l'extrémité avant et au-delà dudit second côté de ladite partie de corps de contact depuis ladite zone d'intersection, de façon que ladite partie de prolongement (32) soit décalée de ladite partie de corps de contact de manière que ledit organe de commande (46) s'étende en avant et d'un côté des lames de contact (20)
- ladite partie de prolongement (32) comportant une portion (60), réalisée en une seule pièce avec lesdites parties de corps de contact et de prolongement (32), qui fait saillie au-delà de la face supérieure (24) du connecteur pour délimiter une surface transversale de butée (62) qui est susceptible de coopérer avec le bord transversal antérieur (64) de la carte (C).

2. Connecteur électrique (10) selon la revendication précédente, **caractérisé en ce que** le corps de contact et le prolongement sont en matériau isolant (14, 16) et sont réalisés par moulage et comportent une première (14) partie qui constitue un module de support de la pluralité de conducteurs électriques en forme de lames déformables élastiquement, et un couvercle (16), et **en ce que** le commutateur (34), est intégré au couvercle (16) du corps du connecteur (10).

3. Connecteur électrique selon la revendication 2, **caractérisé en ce que** le couvercle (16) comporte une série de fentes parallèles (22) à travers chacune desquelles une extrémité de contact d'une lame (20) fait saillie hors du plan de la face supérieure (24) du couvercle.

4. Connecteur électrique selon l'une quelconque des revendications précédentes, **caractérisé en ce que** le commutateur est adjacent à l'un (34) des deux bords latéraux parallèles à la direction d'introduction de la carte.

5. Connecteur électrique selon l'une quelconque des revendications précédentes, **caractérisé en ce que** le commutateur (34) est agencé dans l'épaisseur du corps du connecteur (10).

6. Connecteur électrique selon l'une quelconque des revendications précédentes, **caractérisé en ce que** l'organe de commande (46) du commutateur est un levier qui est articulé autour d'un axe parallèle au plan de la carte.

7. Connecteur électrique selon la revendication 6, **caractérisé en ce que** l'axe d'articulation du levier (46) est perpendiculaire à la direction d'introduction de la carte.

8. Connecteur électrique selon l'une des revendications 6 ou 7, **caractérisé en ce que** le levier (46) comporte un point d'appui (52) qui coopère avec un organe de déclenchement (36) du commutateur (34) et un point (54) d'application de la force motrice par la carte (C) qui coopère avec le bord antérieur (64) de la carte.

9. Connecteur électrique selon la revendication 8, **caractérisé en ce que** le point d'appui (52) est agencé sensiblement entre l'axe d'articulation (49) et le point d'application (54) de la force motrice.

10. Connecteur électrique selon l'une quelconque des revendications 6 à 9, **caractérisé en ce que** le levier (46) est réalisé sous la forme d'une lame déformable élastiquement (46) dont une extrémité (48) est encastrée dans le matériau isolant constitutif du corps du connecteur (10) pour définir l'axe d'articulation (49) du levier.

11. Connecteur électrique selon la revendication 10, **caractérisé en ce que** le levier de commande est une lame métallique déformable élastiquement (46).

12. Connecteur électrique selon l'une quelconque des revendications 6 à 11**, caractérisé en ce que** le levier (46) de commande comporte une rampe de commande (54) qui fait saillie hors du plan de ladite face supérieure (24) du connecteur (10).

13. Connecteur électrique selon la revendication 12, en combinaison avec l'une des revendication 10 ou 11, **caractérisé en ce que** la rampe de commande (54) est formée au voisinage de l'extrémité libre de la lame (46) opposée à son extrémité encastrée (48).

14. Connecteur électrique selon la revendication 13, **caractérisé en ce que** la lame constituant le levier de commande comporte un point de flexion (68) agencé entre le point d'appui (52) et le point (54) d'application de la force motrice constitué par la rampe de commande.

15. Connecteur électrique selon l'une quelconque des revendications 6 à 14 prise en combinaison avec l'une des revendications 2 ou 3, **caractérisé en ce que** le levier de commande (46) du commutateur est intégré au couvercle (16) du connecteur.

16. Connecteur électrique selon la revendication 15 prise en combinaison avec l'une des revendications 12 à 14, **caractérisé en ce que** le couvercle comporte une fente (56) à travers laquelle fait saillie la rampe de commande (54) du levier.

17. Connecteur électrique selon l'une quelconque des revendications 6 à 14, **caractérisé en ce que** le commutateur est intégré à une partie (14) du connecteur qui constitue un module de support des conducteurs électriques (20).

18. Connecteur électrique selon la revendication 17, **caractérisé en ce que** ladite partie (14) du connecteur comporte une fente (56) à travers laquelle fait saillie une portion d'un élément de commande du commutateur.

## Claims

1. Electrical connector (10) for the connection of an electronic memory card (C) including a plurality of electrical contact pads on its main lower face, the electrical connector including :
- a contact body portion which delimits an upper face (24) ;
- a plurality of electrical conductors, supported by the contact body portion, in the form of elastically deformable blades (20), each contact blade (20) including a contact end which projects above said upper face (24) of the contact body portion, and including a connecting output (28) with a printed circuit board ;
- an extension portion (32) which delimits an upper face ;
- an electrical switch mounted in a body (34), the body (34) being mounted in a housing formed in a face of said extension portion (32), and including connecting outputs (35) with the printed circuit board ;
- an operating member (46) for tripping the switch which projects above said upper face of the extension portion (32),
- said contact body portion and extension (32) portion being moulded in one single piece with their said upper faces being coplanar ;
- said contact body portion having, seen from above, a substantially rectangular overall outline with front and rear ends and first and second opposed edges, said contact body portion including an intersection location at the intersection of said front end and of said second edge ;
- said extension portion (32) extending beyond the front end and beyond said second edge of said contact body portion from said intersection location so that said switch body portion (32) is offset from said contact body portion in order that the operating member extends forwardly and on one side of the contact blades (20) ;
- said extension portion (32) comprising a portion (60), moulded in one single piece with said contact body portion and extension (32) portion, which projects beyond the upper face (24) of the connector in order to delimit a transverse stop surface (62) which is capable of engaging with the front transverse end (64) of the card (C).

2. Electrical connector (10) according to the preceding claim, **characterized in that** the contact body (10) and the extension body are made of insulating material (14, 16) and are moulded and includes a first (14) part which forms a supporting module for the plurality of electrical conductors in shape of elastically deformable blades and a cover (16), and **in that** the switch (34) is integrated in the cover (16) of the body of the connector (10).

3. Electrical connector according to claim 2, **characterized in that** the cover (16) includes a series of parallel slots (22) through each of which one contact end of a blade (20) projects out of the plane of the upper face (24) of the cover.

4. Electrical connector according to anyone of the preceding claims, **characterized in that** the switch is adjacent to one (34) of the two lateral edges parallel to the direction of insertion of the card.

5. Electrical connector according to anyone of the preceding claims, **characterized in that** the switch (34) is arranged in the thickness of the body of the connector (10).

6. Electrical connector according to anyone of the preceding claims, **characterized in that** the operating member (46) for operating the switch is a lever which is articulated about an axis parallel to the plane of the card.

7. Electrical connector according to Claim 6, **characterized in that** the articulation axis of the lever (46) is perpendicular to the insertion direction of the card.

8. Electrical connector according to either of Claims 6 and 7, **characterized in that** the lever (46) includes a point of bearing (52) which engages with a member (36) for tripping the switch (34) and a point of application (54) of the driving force by the card (C) which engages with the front edge (64) of the card.

9. Electrical connector according to Claim 8, **characterized in that** the point of bearing (52) is arranged substantially between the articulation axis (49) and the point of application (54) of the driving force.

10. Electrical connector according to anyone of Claims 6 to 9, **characterized in that** the lever (46) is produced in the form of an elastically deformable blade (46), one end (48) of which is embedded in the insulating material forming the body of the connector (10) in order to define the articulation axis (49) of the lever.

11. Electrical connector according to Claim 10, **characterized in that** the operating lever is an elastically deformable metal blade (46).

12. Electrical connector according to anyone of Claims 6 to 11, **characterized in that** the operating lever (46) includes an operating ramp (54) which projects out of the plane of the said upper face (24) of the connector (10).

13. Electrical connector according to Claim 12, in combination with either of Claims 10 and 11, **characterized in that** the operating ramp (54) is formed near the free end of the blade (46) opposite its embedded end (48).

14. Electrical connector according to Claim 13, **characterized in that** the blade forming the operating lever includes a point of bending (68) arranged between the point of bearing (52) and the point of application (54) of the driving force formed by the operating ramp.

15. Electrical connector according to any one of Claims 6 to 14, taken in combination with one of Claims 2 or 3, **characterized in that** the lever (46) for operating the switch is integrated into the cover (16) of the connector.

16. Electrical connector according to Claim 15 taken in combination with one of Claims 12 to 14, **characterized in that** the cover includes a slot (56) through which the operating ramp (54) of the lever projects.

17. Electrical connector according to anyone of Claims 6 to 14, **characterized in that** the switch is integrated into a part (14) of the connector which forms a support module for the electrical conductors (20).

18. Electrical connector according to Claim 17, **characterized in that** the said part (14) of the connector includes a slot (56) through which a portion of an element for operating the switch projects.

## Patentansprüche

1. Elektrischer Verbinder (10) zum Anschließen einer elektronischen Speicherkarte (C), mit einer Mehrzahl von elektrischen Kontaktfeldem an seiner unteren Hauptseite, welcher umfaßt:
- einen Kontaktkörperbereich, der eine Oberseite (24) begrenzt;
- eine Mehrzahl von von dem Kontaktkörperbereich getragenen elektrischen Leitern in Form von elastisch verformbaren Zungen (20), wobei jede Kontaktzunge (20) ein Kontaktende aufweist, das über die Oberseite (24) des Kontaktkörperbereichs vorspringt und einen Anschluss (28) zum Anschließen an eine gedruckte Leiterplatte ausweist;
- einen Verlängerungsbereich (32), der eine Oberseite begrenzt;
- einen elektrischen Schalter, der in einem Körper (34) angeordnet ist, wobei der Körper (34) in einem Gehäuse angeordnet ist, das in einer Fläche des Verlängerungsbereichs (32) gebildet ist und Anschlüsse (35) zur Verbindung mit der gedruckten Leiterplatte aufweist;
- ein Steuerorgan (46) zum Auslösen des Schalters, das über die Oberseite des Verlängerungsbereichs übersteht;
- wobei Kontaktkörperbereich und Verlängerungsbereich (32) einteilig abgeformt und mit ihren Oberseiten koplanar ausgebildet sind;
- der Kontaktkörperbereich in Draufsicht einen im Wesentlichen rechteckigen Umriss mit vorderem und hinterem Ende und gegenüberliegendem erstem und zweitem Rand hat, und der Kontaktkörperbereich eine Schnittzone am Schnitt des vorderen Endes und des zweiten Randes aufweist;
- der Verlängerungsbereich (32) sich über das vordere Ende und über den zweiten Rand des Kontaktkörperbereichs hinaus von der Schnittzone aus erstreckt, so dass der Verlängerungsbereich (32) gegen den Kontaktkörperbereich so versetzt ist, dass das Steuerorgan (46) sich vor den und auf einer Seite der Kontaktzungen (20) erstreckt;
- der Verlängerungsbereich (32) einen Abschnitt (60) aufweist, der einteilig mit Kontaktkörperbereich und Verlängerungsbereich (32) ausgebildet ist, der über die Oberseite (24) des Verbinders vorsteht, um eine Queranschlagfläche (62) zu Oberseite (24) des Verbinders vorsteht, um eine Queranschlagfläche (62) zu begrenzen, die in der Lage ist, mit der vorderen Querkante (64) der Karte (C) zusammenzuwirken.

2. Elektrischer Verbinder (10) nach dem vorhergehenden Anspruch, **dadurch gekennzeichnet, dass** der Kontakt und der Verlängerungskörper aus isolierendem Material (14, 16) sind und durch Abformen gebildet sind und einen ersten Bereich (14) aufweisen, der ein Trägermodul für die Mehrzahl von elektrischen Leitern in Form von elastisch verformbaren Zungen und einen Deckel (16) bildet, und dass der Schalter (34) in den Deckel (16) des Körpers des Verbinders (10) integriert ist.

3. Elektrischer Verbinder nach Anspruch 2, **dadurch gekennzeichnet, dass** der Deckel (16) eine Serie von parallelen Schlitzen (22) umfasst, durch die jeweils ein Kontaktende einer Zunge (20) über die Ebene der Oberseite (24) des Deckels vorsteht.

4. Elektrischer Verbinder nach einem beliebigen der vorhergehenden Ansprüche, **dadurch gekennzeichnet, dass** der Schalter zu einem (34) der zwei seitlichen, zur Einführungsrichtung der Karte parallelen Ränder benachbart ist.

5. Elektrischer Verbinder nach einem beliebigen der vorhergehenden Ansprüche, **dadurch gekennzeichnet, dass** der Schalter (12, 32, 34) in der Dicke des Körpers des Verbinders (10) angeordnet ist.

6. Elektrischer Verbinder nach einem beliebigen der vorhergehenden Ansprüche, **dadurch gekennzeichnet, dass** das Steuerorgan (46) des Schalters ein Hebel ist, der um eine zur Ebene der Karte parallele Achse gelenkig ist.

7. Elektrischer Verbinder nach Anspruch 6, **dadurch gekennzeichnet, dass** die Gelenkachse des Hebels (46) senkrecht zur Einführungsrichtung der Karte ist.

8. Elektrischer Verbinder nach einem der Ansprüche 6 oder 7, **dadurch gekennzeichnet, dass** der Hebel (46) einen Andrückpunkt (52), der mit einem Auslöseorgan (36) des Schalters (34) zusammenwirkt, und einen Punkt zur Ausübung der Antriebskraft durch die Karte (C) aufweist, der mit dem vorderen Rand (64) der Karte zusammenwirkt.

9. Elektrischer Verbinder nach Anspruch 8, **dadurch gekennzeichnet, dass** der Andrückpunkt (52) im Wesentlichen zwischen der Gelenkachse (49) und dem Ausübungspunkt (54) der Antriebskraft angeordnet ist.

10. Elektrischer Verbinder nach einem beliebigen der vorhergehenden Ansprüche 6 bis 9, **dadurch gekennzeichnet, dass** der Hebel (46) in Form einer elastisch verformbaren Zunge (46) ausgebildet ist, von der ein Ende (48) in das den Körper des Verbinders (10) bildende isolierende Material eingespannt ist, um die Gelenkachse (49) des Hebels zu definieren.

11. Elektrischer Verbinder nach Anspruch 10, **dadurch gekennzeichnet, dass** der Steuerhebel eine elastisch verformbare metallische Zunge (46) ist.

12. Elektrischer Verbinder nach einem beliebigen der vorhergehenden Ansprüche 6 bis 11, **dadurch gekennzeichnet, dass** der Steuerhebel (46) eine Steuerrampe (54) aufweist, die aus der Ebene der Oberseite (24) des Verbinders (10) übersteht.

13. Elektrischer Verbinder nach Anspruch 12, in Kombination mit einem der Ansprüche 10 oder 11, **dadurch gekennzeichnet, dass** die Steuerrampe (54) benachbart zum freien Ende der Zunge (46) gegenüber ihrem eingespannten Ende (48) gebildet ist.

14. Elektrischer Verbinder nach Anspruch 13, **dadurch gekennzeichnet, dass** die den Steuerhebel bildende Zunge einen Biegepunkt (68) aufweist, der zwischen dem Andrückpunkt (52) und dem durch die Steuerrampe gebildeten Ausübungspunkt (54) der Antriebskraft angeordnet ist.

15. Elektrischer Verbinder nach einem der Ansprüche 6 bis 14, in Kombination mit einem der Ansprüche 2 oder 3, **dadurch gekennzeichnet, dass** der Steuerhebel (46) des Schalters in den Deckel (16) des Verbinders integriert ist.

16. Elektrischer Verbinder nach Anspruch 15, in Kombination mit einem der Ansprüche 12 bis 14, **dadurch gekennzeichnet, dass** der Deckel einen Schlitz (56) aufweist, durch den die Steuerrampe (54) des Hebels vorsteht.

17. Elektrischer Verbinder nach einem der Ansprüche 6 bis 14, **dadurch gekennzeichnet, dass** der Schalter in einen Bereich (14) des Verbinders integriert ist, der ein Trägenmodul der elektrischen Leiter (20) bildet.

18. Elektrischer Verbinder nach Anspruch 17, **dadurch gekennzeichnet, dass** der Bereich (14) des Verbinders einen Schlitz (56) aufweist, durch welchen ein Bereich eines Steuerelements des Schalters vorsteht.
